# EUROPÄISCHE PATENTSCHRIFT

(11) **EP 4 407 389 B1**
(45) Veröffentlichungstag und Bekanntmachung des Hinweises auf die Patenterteilung: **11.02.2026**
(21) Anmeldenummer: 23212580.7
(22) Anmeldetag: 28.11.2023
(51) Int. Cl.: G05B 19/042, G06N 20/00, G06N 3/09, G06N 5/025

(54) **VERFAHREN ZUM BETREIBEN EINES FELDGERÄTES DER PROZESSMESSTECHNIK UND ABFÜLLANLAGE, MIT DER DAS VERFAHREN AUSGEFÜHRT WIRD**
METHOD FOR OPERATING A FIELD DEVICE USED IN PROCESS MEASUREMENT TECHNOLOGY AND FILLING SYSTEM WITH WHICH THE METHOD IS CARRIED OUT
PROCÉDÉ DE FONCTIONNEMENT D'UN APPAREIL DE TERRAIN DE LA TECHNIQUE DE MESURE DE PROCESSUS ET INSTALLATION DE REMPLISSAGE METTANT EN OEUVRE LE PROCÉDÉ

(30) Priorität: 24.01.2023 DE 102023101668
(43) Veröffentlichungstag der Anmeldung: 31.07.2024
(73) Patentinhaber: Krohne Messtechnik GmbH, 47058 Duisburg (DE)
(72) Erfinder: Walbrecker, Sven, 27639 Wurster Nordseeküste (DE); Kuschnerus, Dirk, 47802 Krefeld (DE); Mucke, Hansjörg, 41066 Mönchengladbach (DE); Krawczyk-Becker, Martin, 44627 Herne (DE)
(74) Vertreter: Gesthuysen Patentanwälte

(56) Entgegenhaltungen:
- KR-B1- 101 875 341
- US-A1- 2022 229 423

## Beschreibung

Die Erfindung betrifft ein Verfahren zum Betreiben eines Feldgerätes der Prozessmesstechnik, wobei das Feldgerät über einen Feldbus zur Übermittlung von Feldbusnachrichten mit wenigstens einem anderen Busteilnehmer in Kommunikationsverbindung steht, wobei dem Feldgerät zumindest eine Zustandsregel zum Wechsel von einem Normalbetrieb des Feldgeräts in einen Diagnosebetrieb des Feldgeräts bei Erfüllen der Zustandsregel vorgegeben ist, wobei die Zustandsregel von wenigstens einer dem Feldgerät bekannten Zustandsgröße des Feldgeräts abhängt. Darüber hinaus betrifft die Erfindung auch eine Abfüllanlage mit einer ersten Füllstelle und mit wenigstens einer zweiten Füllstelle, wobei die erste Füllstelle wenigstens ein erstes Füllventil, wenigstens einen ersten Durchfluss- oder Füllstandssensor und wenigstens eine erste Steuer- und Auswerteeinheit zur Steuerung und Überwachung des Abfüllprozesses der ersten Füllstelle aufweist und wobei die zweite Füllstelle wenigstens ein zweites Füllventil, wenigstens einen zweiten Durchfluss- oder Füllstandssensor und wenigstens eine zweite Steuer- und Auswerteeinheit zur Steuerung und Überwachung des Abfüllprozesses der zweiten Füllstelle aufweist, wobei das erste Füllventil, der erste Durchfluss- oder Füllstandssensor, das zweite Füllventil und der zweite Durchfluss- oder Füllstandssensor über einen Feldbus miteinander in Kommunikationsverbindung stehen, wobei zumindest der ersten Steuer- und Auswerteeinheit eine Zustandsregel zum Wechsel von einem Normalbetrieb des ersten Durchfluss- oder Füllstandssensors in einen Diagnosebetrieb des ersten Durchfluss- oder Füllstandssensors bei Erfüllen der Zustandsregel vorgegeben ist, wobei die Zustandsregel von wenigstens einer dem ersten Durchfluss- oder Füllstandssensor bekannten Zustandsgröße des ersten Durchfluss- oder Füllstandssensors abhängt.

Feldgeräte der Prozessmesstechnik sind üblicherweise "im Feld" verbaut, also in einer industriellen Umgebung wie beispielsweise einer Automatisierungs- und/oder prozesstechnischen Anlage. Bei den Feldgeräten mit einer Messaufgabe kann es sich beispielsweise um Durchfluss-, Füllstand-, Druck-, Temperatur- oder pH-Messgeräte handeln. Feldgeräte können auch als Aktoren ausgebildet sein, beispielsweise als Stellventil, Linearantriebe auf Basis verschiedener Technologien (elektrisch, hydraulisch, pneumatisch), Schrittmotoren usw.

In vielen prozesstechnischen Anlagen kommen Feldgeräte beider Kategorien gemeinsam zum Einsatz, beispielsweise um prozesstechnische Regelungsvorgänge zu implementieren. Ein gutes Beispiel für den gemeinsamen Einsatz derartiger Feldgeräte sind Abfüllanlagen, bei denen definierte Füllmengen eines Mediums in dafür vorgesehene Behältnisse abgefüllt werden. Die Füllstellen einer Abfüllanlage weisen üblicherweise jeweils ein Füllventil und einen Durchfluss- oder Füllstandssensor auf, wobei mit dem Füllventil aktiv auf die Füllmenge Einfluss genommen werden kann und wobei der Durchfluss- oder Füllstandssensor durch Messung den Abfüllvorgang überwacht.

Viele der in der Prozessmesstechnik eingesetzten Feldgeräte weisen neben einem Normalbetrieb, der den "normalen" Betriebszustand des Feldgeräts darstellt - bei einem als Messgerät arbeitendem Feldgerät also der Messbetrieb -, auch einen Diagnosebetrieb auf, der - wie der Name schon sagt - zur Diagnose des Feldgeräts dient, in dem das Feldgerät also auf eine korrekte Funktionsweise hin überprüft wird. Dies ist notwendig, um einen zuverlässigen Betrieb des Prozesses, beispielsweise in Form der zuvor genannten Abfüllanlage, in den das Feldgerät eingebunden ist, zu gewährleisten. Die Diagnosen können von Feldgerät zu Feldgerät und von umgesetztem Messprinzip zu Messprinzip ganz unterschiedlich sein. Bekannte Diagnosen sind beispielsweise eine Nullpunktüberwachung, die bei vielen Messkonzepten eingesetzt wird, eine elektrische Leitfähigkeitsüberwachung oder auch - zum Beispiel bei der Verwendung von magnetisch-induktiven Durchflussmessgeräten - eine Überwachung des Elektrodenrauschens der Messelektroden. Auf die Art der Diagnose und den genauen Vorgang der Diagnose kommt es hier im Einzelnen nicht an.

Diagnosebetriebe lassen sich häufig nur sinnvoll durchführen, wenn sich das Feldgerät in einem geeigneten Zustand befindet. Dies trifft beispielsweise bei der Nullpunktüberwachung zu, bei der überprüft wird, ob beispielsweise bei einem Durchflussmessgerät ein tatsächlicher Nulldurchfluss auch als Nulldurchfluss gemessen wird. Ein anderes Beispiel ist die Leitfähigkeitsüberwachung bei magnetisch-induktiven Durchflussmessgeräten, für die zumindest ein geringer Durchfluss vorhanden sein muss. Ein anderes Beispiel bei magnetisch-induktiven Durchflussmessgeräten ist die Überwachung des Elektrodenrauschens.

Um zu gewährleisten, dass der Diagnosebetrieb nur in einem geeigneten Zustand des Feldgeräts durchgeführt wird, wird im Feldgerät eine entsprechende Zustandsregel vorgegeben, deren Erfüllung überprüft wird. Wenn die Zustandsregel erfüllt wird, wechselt das Feldgerät von dem Normalbetrieb in den Diagnosebetrieb, um die entsprechende Diagnose durchzuführen. Die Zustandsregel hängt von wenigstens einer dem Feldgerät bekannten Zustandsgröße des Feldgeräts ab. Beim Beispiel der Nullpunktüberwachung ist die Zustandsgröße des Feldgeräts die von dem Feldgerät ermittelte primäre Messgröße selbst, bei einem Durchflussmessgerät also der Durchfluss. Es können aber auch andere Zustandsgrößen eine Rolle spielen, wie beispielsweise eine von dem Feldgerät erfasste Temperatur - zum Beispiel die Temperatur des durch ein Durchflussmessgerät fließenden Mediums -, die Änderungsgeschwindigkeit einer Messgröße usw.

Die Verwendung von Diagnosen, die durch Auswerten einer Zustandsregel ausgelöst werden, kann relativ aufwendig sein, weil die relevanten Zustandsgrößen erfasst und ausgewertet werden müssen, insbesondere wenn die Zustandsgrößen im Normalbetrieb eigentlich nicht von Interesse sind. Wenn eine Zustandsgröße nicht mehr korrekt erfasst werden kann, wird unter Umständen ein Diagnosebetrieb von dem Feldgerät nicht mehr selbstständig erreicht, was ersichtlich problematisch ist.

US 2022/229423 A1 offenbart ein Verfahren zur Überprüfung der Normenkonformität von Sicherheitssensoreinrichtungen anhand von Regeln, wobei die Erkennung einer Anomalie eine Nachprüfung einer Sicherheitssensoreinrichtung auslöst.

Aufgabe der vorliegenden Erfindung ist es daher, das zuvor beschriebene Verfahren zum Betreiben eines Feldgeräts der Prozessmesstechnik so weiterzubilden, dass die zuvor genannten Nachteile zumindest teilweise vermieden werden.

Die zuvor hergeleitete Aufgabe ist bei dem eingangs beschriebenen Verfahren dadurch gelöst, dass in einem Anlernbetrieb zumindest ein Teil der Feldbusnachrichten erfasst und gespeichert wird. Das Feldgerät ist voraussetzungsgemäß über einen Feldbus mit wenigstens einem anderen Busteilnehmer verbunden. Üblicherweise sind eine Vielzahl von Feldgeräten über einen Feldbus miteinander verbunden, insbesondere Feldgeräte, die in einem zusammenhängenden Prozess ihren Dienst tun. Die über den Feldbus ausgetauschten Feldbusnachrichten können prinzipiell von allen Busteilnehmern erfasst werden, auch wenn die Feldbusnachrichten nur an einen bestimmten Busteilnehmer aller angeschlossenen Busteilnehmer adressiert ist. In dem zuvor genannten Anlernbetrieb wird jedenfalls zumindest ein Teil der Feldbusnachrichten erfasst und gespeichert. Durch das Erfassen und Speichern zumindest eines Teils der Feldbusnachrichten im Anlernbetrieb ist also ein Rückblick in die Vergangenheit der Feldbus-Kommunikation möglich, und es stehen so vergangene Feldbusnachrichten zur Verfügung, die über den Feldbus übermittelt worden sind.

In einer Mehrzahl von Erfassungsschritten werden jeweils im Falle des Erfüllens der Zustandsregel die erfassten und gespeicherten Feldbusnachrichten zumindest teilweise als ein Anlerndatensatz gespeichert, sodass eine Mehrzahl von solchen Anlerndatensätzen mit Feldbusnachrichten erfasst wird, wobei die Feldbusnachrichten der Erfüllung der Zustandsregel vorausgegangen sind.

In einem Auswerteschritt wird durch Auswerten mehrerer Anlerndatensätze eine von wenigstens einer Feldbusnachricht abhängige Nachrichtenregel zum Wechsel von dem Normalbetrieb des Feldgeräts in den Diagnosebetrieb des Feldgeräts abgeleitet. Bei der Feldbusnachricht muss es sich nicht zwingend um eine an das Feldgerät adressierte Feldbusnachricht handeln. Es handelt sich jedenfalls um eine Feldbusnachricht, die im Anlernbetrieb erfasst worden ist und in die Anlerndatensätze Eingang gefunden hat. Die Nachrichtenregel zum Wechsel von dem Normalbetrieb in den Diagnosebetrieb des Feldgeräts wird allgemein dadurch abgeleitet, dass die Feldbusnachrichten der Anlerndatensätze auf mögliche Gemeinsamkeiten hin untersucht werden, die mit dem Auslösen des Diagnosebetriebs bzw. dem Erfüllen der Zustandsregel in Verbindung stehen.

Danach wendet das Feldgerät anstelle von oder zusätzlich zu der Zustandsregel die Nachrichtenregel zum Wechsel von dem Normalbetrieb des Feldgeräts in den Diagnosebetrieb des Feldgeräts an. Wenn das Feldgerät anstelle der Zustandsregel die Nachrichtenregel auswertet, besteht für das Feldgerät keine Notwendigkeit mehr, die sonst erforderlichen Zustandsgrößen zur Auswertung der Zustandsregel zu erfassen. Es werden dadurch also unter Umständen gerätetechnische Aufwände eingespart, beispielsweise in Form von Sensoren zur Erfassung der Zustandsgrößen, oder auch in Form von Rechenkapazität der in jedem Feldgerät üblicherweise verbauten Recheneinheit. Durch das Verfahren wird es auch vermieden, dass der Diagnosebetrieb aufgrund von fehlerhaft erfassten Zustandsgrößen nicht mehr sicher erreicht wird. Beim gleichzeitigen Ausführen der Zustandsregel und der Nachrichtenregel besteht die Möglichkeit einer Plausibilitäts- oder Konsistenzprüfung der Ergebnisse beider Verfahren. Es können beispielsweise Rückschlüsse gezogen werden auf eine fehlerhafte Erfassung von Zustandsgrößen.

In einer bevorzugten Ausführung des Verfahrens ist vorgesehen, dass im Anlernbetrieb die Feldbusnachrichten von dem Feldgerät erfasst werden und die Erfassungsschritte und der Auswerteschritt auf dem Feldgerät ausgeführt werden. Diese Verfahrensvariante ist darauf ausgerichtet, dass jedes Feldgerät individuell abgestimmt die Zustandsregel durch eine entsprechende Nachrichtenregel ersetzt, wodurch auf individuelle Besonderheiten des Feldgeräts oder seiner Einbausituation eingegangen werden kann. Insbesondere ist kein zusätzlicher gerätetechnischer Aufwand erforderlich. Diese Verfahrensweise ist bei Feldgeräten vorteilhaft, die über eine leistungsfähige Hardwareausstattung und eine angemessene, für die Durchführung des Verfahrens ausreichende Rechnerleistung verfügen.

Bei einer alternativen Ausgestaltung des Verfahrens ist hingegen vorgesehen, dass im Anlernbetrieb die Feldbusnachrichten von einem Service-Busteilnehmer erfasst werden und die Erfassungsschritte und der Auswerteschritt auf dem Service-Busteilnehmer ausgeführt werden, wobei das Feldgerät die Zustandsregel auswertet und das Erfüllen der Zustandsregel dem Service-Busteilnehmer mitteilt. Vorzugsweise geschieht die Mitteilung des Erfüllens der Zustandsregel mittels einer Feldbusnachricht. Dadurch ist es möglich, den Anlernbetrieb zur Erlangung der Nachrichtenregel auf einem dafür geeigneten, hinreichend leistungsfähigen Busteilnehmer auszuführen, der über eine Rechenkapazität verfügt, die deutlich über die Leistungsfähigkeit eines normalen Feldgeräts der Prozessmesstechnik hinausgeht. Vorzugsweise überträgt der Service-Busteilnehmer die von ihm abgeleitete Nachrichtenregel zu dem entsprechenden Feldgerät, wobei die Nachrichtenregel dann bei dem empfangenden Feldgerät angewendet wird. Bei einer bevorzugten Ausgestaltung des Verfahrens wird die Nachrichtenregel auch zu anderen Feldgeräten übertragen, die sich in einer identischen Anwendungssituation mit einer identischen Zustandsregel befinden.

Eine weitere bevorzugte Ausgestaltung des Verfahrens sieht vor, dass das Ableiten der Nachrichtenregel aus den Anlerndatensätzen auf Grundlage einer Regressionsanalyse erfolgt mit den verschiedenen Busnachrichten als unabhängige Variablen und der Erfüllung der Zustandsregel als abhängige Variable. Die Regressionsanalyse ist dazu geeignet, Relationen zwischen den abhängigen und der unabhängigen Variablen herzustellen. Durch das Verfahren werden Korrelationen identifiziert und durch den erhaltenen Regressionszusammenhang modelliert. Bei einer bevorzugten Ausgestaltung dieser Verfahrensvariante ist vorgesehen, dass die Busnachrichten mit der kleinsten Teilkorrelation an der Erfüllung der Zustandsregel nach und nach, also sequenziell, ausgeschlossen werden, bis nur noch eine vorgegebene Anzahl an unabhängigen Variablen Teil der Nachrichtenregel sind. Dadurch kann die Nachrichtenregel erheblich vereinfacht werden. Zu berücksichtigen ist, dass die Korrelationen nicht zwangsläufig auch eine Kausalität wiedergeben.

Bei einer bevorzugten Ausgestaltung des Verfahrens ist deshalb vorgesehen, dass zufällige Anlerndatensätze gespeichert werden, die nicht im Zusammenhang stehen mit dem Erfüllen der Zustandsregel. Die zufälligen Anlerndatensätze sind also zeitlich nicht gekoppelt an das Erfüllen der Zustandsregel. Mit den zufälligen Anlerndatensätzen wird dann ebenfalls eine Nachrichtenregel auf Grundlage einer Regressionsanalyse abgeleitet. Wenn die aus den zufälligen Anlerndatensätzen abgeleitete Nachrichtenregel identisch ist mit der aus den regulären Anlerndatensätzen erhaltenen Nachrichtenregel, oder wenn die aus den zufälligen Anlerndatensätzen abgeleitete Nachrichtenregel zu einem vorgegebenen Prozentsatz von den gleichen Feldbusnachrichten als unabhängige Variablen abhängig ist, wird die unter Anwendung der regulären Anlerndatensätze abgeleitete Nachrichtenregel verworfen. Dadurch wird vermieden, dass Feldbusnachrichten, die nicht im Zusammenhang stehen mit dem Erfüllen der Zustandsregel, unzulässigerweise berücksichtigt werden. Das kann beispielsweise auf Busnachrichten zutreffen, die periodisch, insbesondere in hoher Frequenz auf dem Feldbus übermittelt werden.

Bei einer alternativen Weiterbildung des Verfahrens ist vorgesehen, dass das Ableiten der Nachrichtenregel aus den Anlerndatensätzen auf Grundlage des Trainierens eines künstlichen neuronalen Netzes erfolgt, mit zumindest einem Teil der Busnachrichten der Anlerndatensätze als Eingangsgrößen und der Erfüllung der Zustandsregel als Ausgangsgröße. Besonders bevorzugt ist vorgesehen, dass als Eingangsgröße zumindest teilweise auch der relative Zeitpunkt des Auftretens der jeweiligen Busnachricht verwendet wird. Als relativer Zeitpunkt wird bevorzugt der Abstand des Auftretens der Busnachricht in Bezug auf den Zeitpunkt des Erfüllens der Zustandsregel verwendet. Dadurch kann auch eine zeitliche Abfolge bestimmter Busnachrichten aufeinander berücksichtigt werden.

Eine weitere Weiterbildung des Verfahrens zeichnet sich dadurch aus, dass in den Erfassungsschritten solche Feldbusnachrichten in einem Anlerndatensatz gespeichert werden, die nicht an das Feldgerät selbst adressiert waren. Bei einer Abfüllanlage könnten das beispielsweise Nachrichten sein, die von Füllventilen - auch benachbarter Füllstellen - versendet worden sind. Dadurch wird erreicht, dass die Nachrichtenregel auf einer vernetzten Informationsbasis fußt, die unabhängig von dem betreffenden Feldgerät ist.

Die aufgezeigte Aufgabe ist ebenfalls bei der eingangs beschriebenen Abfüllanlage mit einer ersten Füllstelle und mit wenigstens einer zweiten Füllstelle dadurch gelöst, dass gemäß einer Variante die Steuer- und Auswerteeinheit wenigstens der ersten Füllstelle so ausgestaltet ist, dass die Steuer- und Auswerteeinheit im Betrieb das zuvor geschilderte Verfahren durchführt. Gemäß einer anderen Variante ist vorgesehen, dass mit dem ersten Füllventil und dem ersten Durchfluss- oder Füllstandssensor der ersten Füllstelle und mit dem zweiten Füllventil und dem zweiten Durchfluss- oder Füllstandssensor der zweiten Füllstelle über den Feldbus ein Service-Busteilnehmer verbunden ist und die Abfüllanlage ein Verfahren durchführt, wie es vorstehend in Zusammenhang mit dem Service-Busteilnehmer beschrieben worden ist.

Bei der Abfüllanlage handelt es sich um ein stark vernetztes System mit einer Mehrzahl an identischen Teileinheiten, nämlich den Füllstellen. Das Verfahren lässt sich hier deshalb besonders effektiv durchführen.

Im Einzelnen gibt es nun eine Vielzahl an Möglichkeiten, das beanspruchte Verfahren und auch die beanspruchte Abfüllanlage auszugestalten und weiterzubilden. Dazu wird verwiesen einerseits auf die dem ersten Patentanspruch nachgeordneten Patentansprüche, andererseits auf die folgende Beschreibung von Ausführungsbeispielen in Verbindung mit der Zeichnung. In der Zeichnung zeigen
- Fig. 1: ein aus dem Stand der Technik bekanntes Verfahren zum Betreiben eines Feldgerätes der Prozessmesstechnik, bei dem der Diagnosebetrieb durch Überprüfen einer Zustandsregel ausgelöst wird, und eine entsprechende Abfüllanlage, auf der das Verfahren betrieben wird,
- Fig. 2: schematisch das erfindungsgemäße Verfahren zur Ableitung und Anwendung einer Nachrichtenregel, durch deren Überprüfung der Diagnosebetrieb ausgelöst wird,
- Fig. 3: eine Feldgeräteanordnung ähnlich Fig. 1, bei der das Verfahren zur Ableitung einer Nachrichtenregel auf einem Feldgerät ausgeführt wird,
- Fig. 4: schematisch ein Ausführungsbeispiel, bei dem zusätzlich ein Service-Busteilnehmer vorgesehen ist, auf dem das Verfahren zur Ableitung einer Nachrichtenregel ausgeführt wird,
- Fig. 5: mehrere Anlerndatensätze mit Feldbusnachrichten und die Ableitung einer Nachrichtenregel und
- Fig. 6: das Trainieren eines neuronalen Netzwerkes mit Anlerndatensätzen zur Gewinnung der Nachrichtenregel.

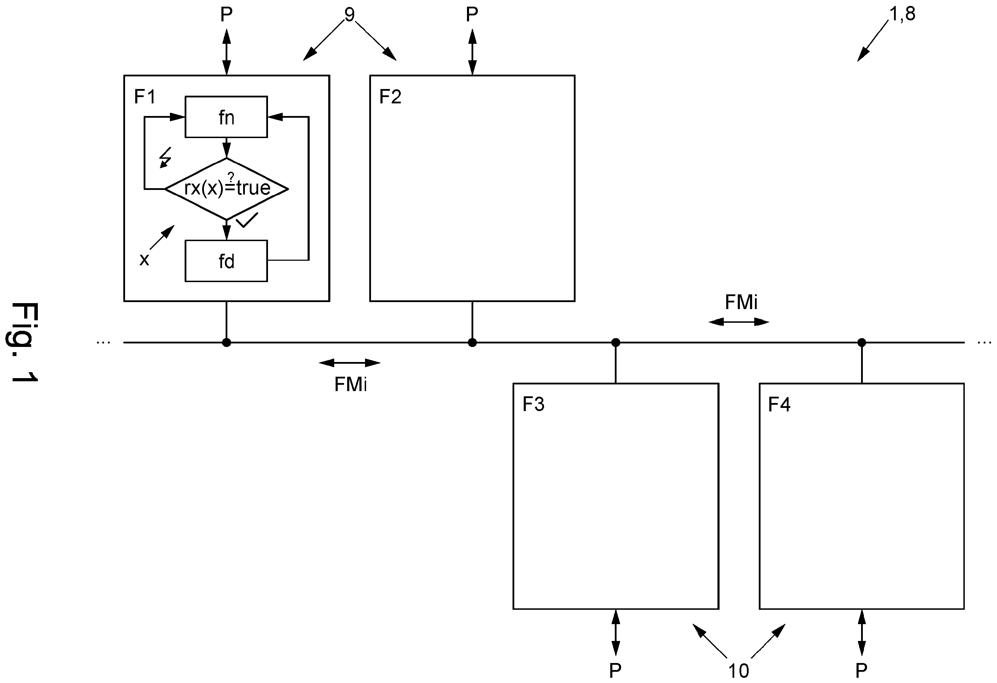

Fig. 1 zeigt ein aus dem Stand der Technik bekanntes Verfahren 1 zum Betreiben eines Feldgeräts F1 der Prozessmesstechnik, wobei das Feldgerät F1 über einen Feldbus 2 zur Übermittlung von Feldbusnachrichten FMi mit wenigstens einem anderen Busteilnehmer F2, F3, F4 in Kommunikationsverbindung steht. Durch den Feldbus 2 wird eine serielle Vernetzung des Feldgerätes F1 mit den anderen Busteilnehmern F2, F3, F4, bei denen es sich in den dargestellten Ausführungsbeispielen ebenfalls um Feldgeräte handelt, realisiert. Bei den Feldbusnachrichten FMi ist es zunächst nicht wesentlich, zu unterscheiden, welcher Busteilnehmer F die Feldbusnachricht FMi abgesetzt hat, welcher Busteilnehmer F die Busnachricht FMi empfängt, insoweit meint der Bezeichner "FMi" eine unspezifische Feldbusnachricht oder auch die Gesamtheit der über den Feldbus 2 übermittelten Feldbusnachrichten FMi.

Bei dem Feldgerät F1 handelt es sich im vorliegenden Fall um ein Durchflussmessgerät. Im Normalbetrieb fn des Feldgeräts F1 führt das Feldgerät F1 seine bestimmungsgemäße Aufgabe durch, also Durchflussmessungen im Messbetrieb.

Im Feldgerät F1 ist eine Zustandsregel rx zum Wechsel von dem Normalbetrieb fn des Feldgeräts F1 in einen Diagnosebetrieb fd des Feldgeräts F1 vorgegeben, wobei der Wechsel von dem Normalbetrieb fn in den Diagnosebetrieb fd bei Erfüllen (rx(x)=! true) der Zustandsregel rx vorgenommen wird.

Der Diagnosebetrieb fd dient im Allgemeinen zur Überwachung verschiedener funktionaler Aspekte des Feldgeräts F1. Die Zustandsregel rx hängt von wenigstens einer dem Feldgerät F1 bekannten Zustandsgröße x ab. Bei der Zustandsgröße x kann es sich um die eigene Messgröße handeln, aber auch um andere für den Betrieb des Feldgeräts F1 diagnoserelevanten Parameter, wie beispielsweise die Gerätetemperatur, ein Druck im Geräteraum, Änderungsraten der Messgröße, die Betriebszeit usw. Um die Zustandsregel rx überprüfen zu können, also um zu überprüfen, ob rx(x) =? true gilt, müssen natürlich eine oder mehrere Zustandsgrößen x erfasst werden, was aufwendig ist. Zudem besteht die Gefahr, dass die Auswertung der Zustandsregel rx fehlerhafte Ergebnisse liefert, wenn die Zustandsgröße x fehlerhaft erfasst wird.

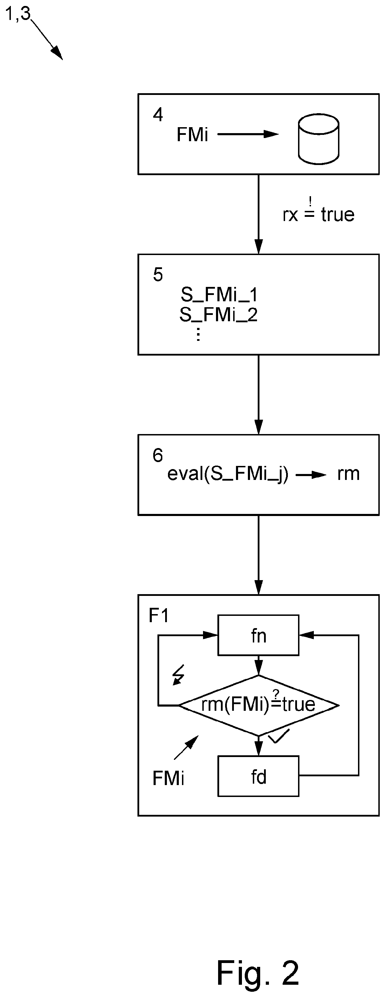

In den Fig. 2 bis 6 sind nun verschiedene Aspekte des erfindungsgemäßen Verfahrens 1 dargestellt, mit dem eine auf der Auswertung von Feldbusnachrichten FMi basierende Nachrichtenregel fn abgeleitet wird, durch deren Auswertung - je nach Ergebnis der Auswertung - das Feldgerät dann vom Normalbetrieb fn in den Diagnosebetrieb fd überführt werden kann.

Fig. 2 zeigt das Verfahren 1 in Gänze. In einem Anlernbetrieb 3 wird zumindest ein Teil der Feldbusnachrichten FMi erfasst und gespeichert 4. Es müssen nicht sämtliche Feldbusnachrichten FMi erfasst und gespeichert 4 werden, es kann auch eine Auswahl der Feldbusnachrichten FMi erfasst und gespeichert 4 werden. Damit wird erreicht, dass jederzeit auf vergangene Feldbusnachrichten FMi zugegriffen werden kann. Denkbar ist beispielsweise, eine bestimmte Anzahl von Feldbusnachrichten FMi nach dem Prinzip eines Ringspeichers abzulegen, sodass immer diese Anzahl an zwar vergangenen, aber jüngsten Feldbusnachrichten FMi bekannt ist.

In einer Mehrzahl von Erfassungsschritten 5 werden jeweils im Falle des Erfüllens der Zustandsregel rx die erfassten und gespeicherten 4 Feldbusnachrichten FMi zumindest teilweise als ein Anlerndatensatz S_FMi gespeichert, sodass eine Mehrzahl von Anlerndatensätzen S_FMi_j, S_FMi_1, S_FMi_2 erfasst wird. Damit sind also verschiedene Sammlungen von Feldbusnachrichten verfügbar, die die Nachrichtenlage auf dem Feldbus 2 vor dem Erfüllen der Zustandsregel rx beschreiben.

In einem dann folgenden Auswerteschritt 6 wird durch Auswerten eval mehrerer Anlerndatensätze S_FMi_j eine von wenigstens einer Feldbusnachricht FMi abhängige Nachrichtenregel rm zum Wechsel von dem Normalbetrieb fn des Feldgeräts F1 in den Diagnosebetrieb fd des Feldgeräts F1 abgeleitet. Ganz allgemein kann gesagt werden, dass das Ableiten der Nachrichtenregel rm darauf basiert, dass die Feldbusnachrichten FMi der Anlerndatensätze F_FMi_j auf Gemeinsamkeiten hin untersucht werden, die mit dem Auslösen des Diagnosebetriebs bzw. dem Erfüllen der Zustandsregel rx in Verbindung stehen.

Mit der abgeleiteten Nachrichtenregel rm ist es nun möglich, dass das Feldgerät F1 anstelle der oder zusätzlich zu der Zustandsregel rx die Nachrichtenregel rm zum Wechsel von dem Normalbetrieb fn des Feldgeräts F1 in den Diagnosebetrieb fd des Feldgeräts F1 anwendet. Dies ist in Fig. 2 unten dargestellt. Bei dem Feldgerät F1 ist die in Fig. 1 noch zur Anwendung kommende Zustandsregel rx ersetzt worden durch die Nachrichtenregel rm, die natürlich nicht mehr von einer oder mehreren Zustandsgrößen x abhängt, sondern von Feldbusnachrichten FMi. Bei den Feldbusnachrichten FMi kann es sich um alle Feldbusnachrichten FMi handeln oder auch nur um eine bestimmte Auswahl an Feldbusnachrichten FMi.

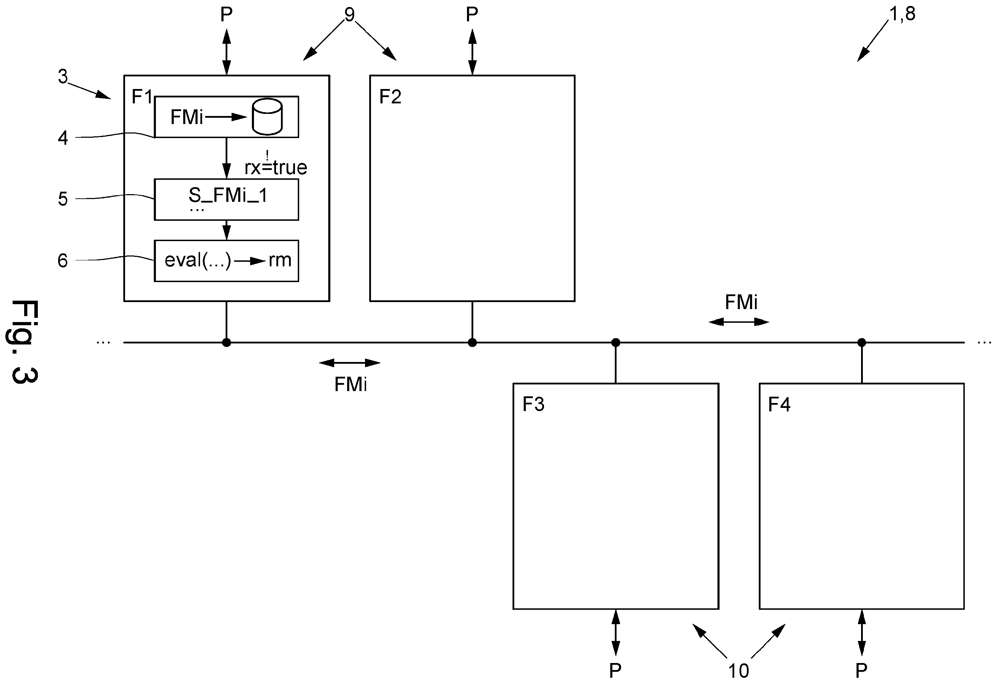

In Fig. 3 ist dargestellt, dass im Anlernbetrieb 3 die Feldbusnachrichten FMi von dem Feldgerät F1 erfasst werden und die Erfassungsschritte 5 und der Auswerteschritt 6 auf dem Feldgerät F1 ausgeführt werden. Dies hat den Vorteil, dass zur Durchführung des Verfahrens 1 keine zusätzlichen gerätetechnischen Aufwände betrieben werden müssen.

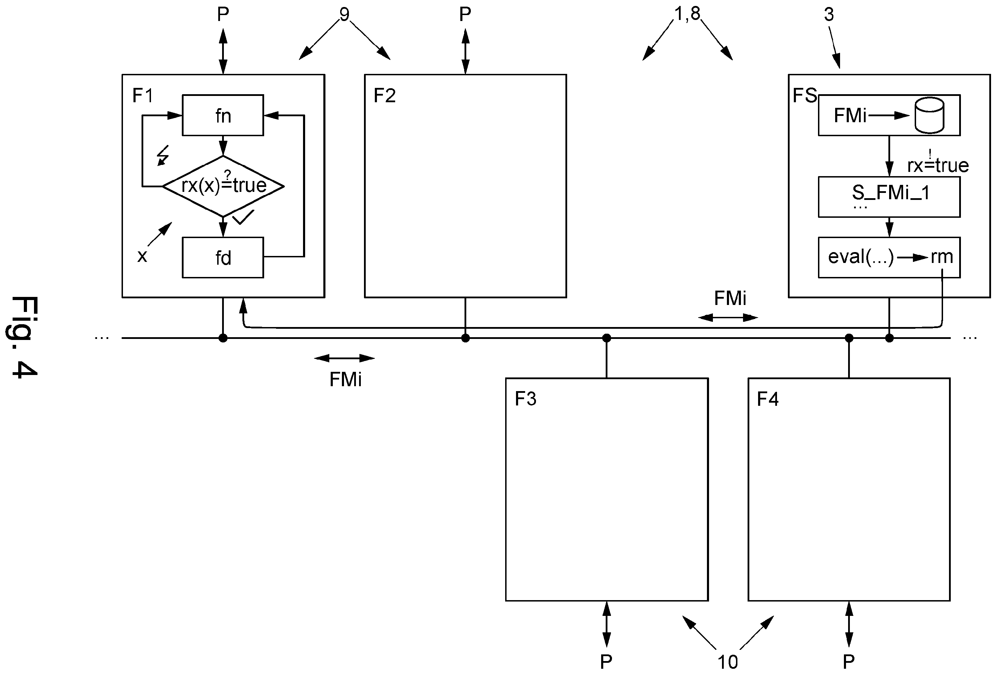

Das Ausführungsbeispiel gemäß Fig. 4 zeigt eine alternative Vorgehensweise. Im Anlernbetrieb 3 werden die Feldbusnachrichten FMi von einem Service-Busteilnehmer FS erfasst und die Erfassungsschritte 5 und der Auswerteschritt 6 werden auf die Service-Busteilnehmer FS ausgeführt. Bei dem Service_Busteilnehmer FS handelt es sich um einen jedenfalls gegenüber dem Feldgerät F1 leistungsfähigeren Rechner, sodass für den Anlernbetrieb 3 eine höhere Rechenkapazität zur Verfügung steht. Das Feldgerät F1 wertet die Zustandsregel rx aus und teilt das Erfüllen (rx =! true) der Zustandsregel rx dem Service-Busteilnehmer FS mit, hier mittels einer Feldbusnachricht. Insofern liegen dem Service-Busteilnehmer FS alle Informationen vor, um die Nachrichtenregel rm abzuleiten. Der Service-Busteilnehmer FS überträgt die abgeleitete Nachrichtenregel rm dann zu dem Feldgerät F1, wo die Nachrichtenregel rm angewendet wird, alternativ oder zusätzlich zu der Zustandsregel rx. Die in Fig. 4 in dem Feldgerät F1 dargestellte Zustandsregel rx wird in einem nachfolgenden Schritt ersetzt durch die übertragene Nachrichtenregel rm.

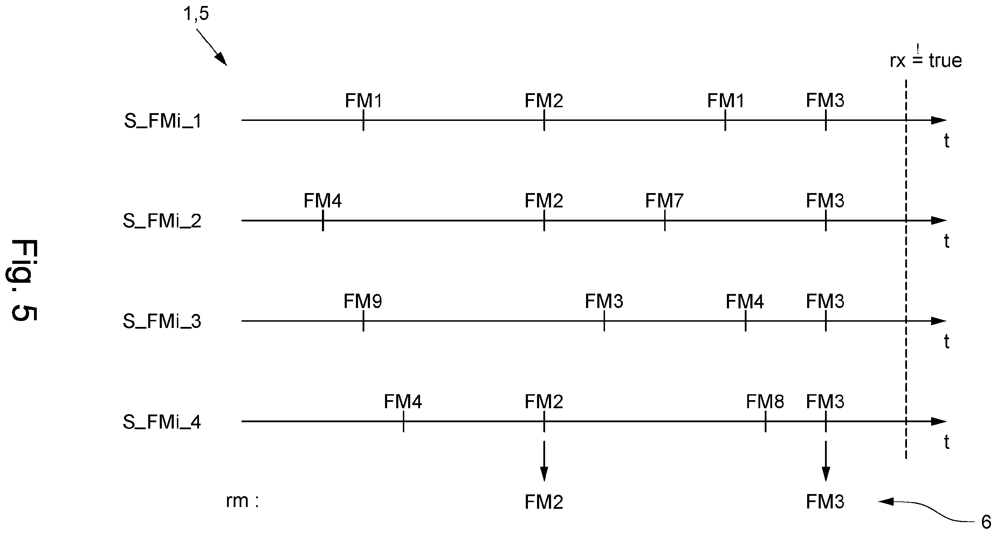

Fig. 5 zeigt beispielhaft eine Mehrzahl von Erfassungsschritten 5 und den Auswerteschritt 6. Dargestellt sind insgesamt vier Anlerndatensätze S_FMi_1, S_FMi_2, S_FMi_3, S_FMi_4. Die Anlerndatensätze S_FMi_j sind immer entstanden, nachdem die Zustandsregel rx erfüllt worden ist (rx(x) =! true). Als Bilderegel sind die letzten vier der im Anlernbetrieb 3 gespeicherten Feldbusnachrichten FMi in die jeweiligen Anlerndatensatz eingegangen. Die Anlerndatensätze S_FMi_j können nun auf Gemeinsamkeiten hinsichtlich des Auftretens von Feldbusnachrichten FMi untersucht werden. Die Untersuchung auf Gemeinsamkeiten hat in dem Ausführungsbeispiel gemäß Fig. 5 dazu geführt, dass das Auftreten der Feldbusnachrichten FM2 und FM3 innerhalb der letzten vier erfassten Feldbusnachrichten FMi als kennzeichnend für das Auslösen des Diagnosebetriebes fd (gemessen an dem Verhalten der Zustandsregel rx) erkannt worden ist. Die Abhängigkeit fällt in dem Ausführungsbeispiel gemäß Fig. 5 ohne Weiteres auf. Algorithmisch lässt sich der Auswerteschritt 6 und damit das Ableiten der Nachrichtenregel rm aus den Anlerndatensätzen S_FMi_j auf Grundlage einer Regressionsanalyse umsetzen, mit den verschiedenen Busnachrichten FMi als unabhängige Variablen und der Erfüllung der Zustandsregel rx als abhängige Variable. In diesem Zusammenhang hat es sich als vorteilhaft herausgestellt, wenn die Busnachrichten FMi mit der kleinsten Teilkorrelation an der Erfüllung der Zustandsregel rx sequenziell ausgeschlossen werden, bis nur noch eine vorgegebene Anzahl an unabhängigen Variablen Teil der Nachrichtenregel rm ist.

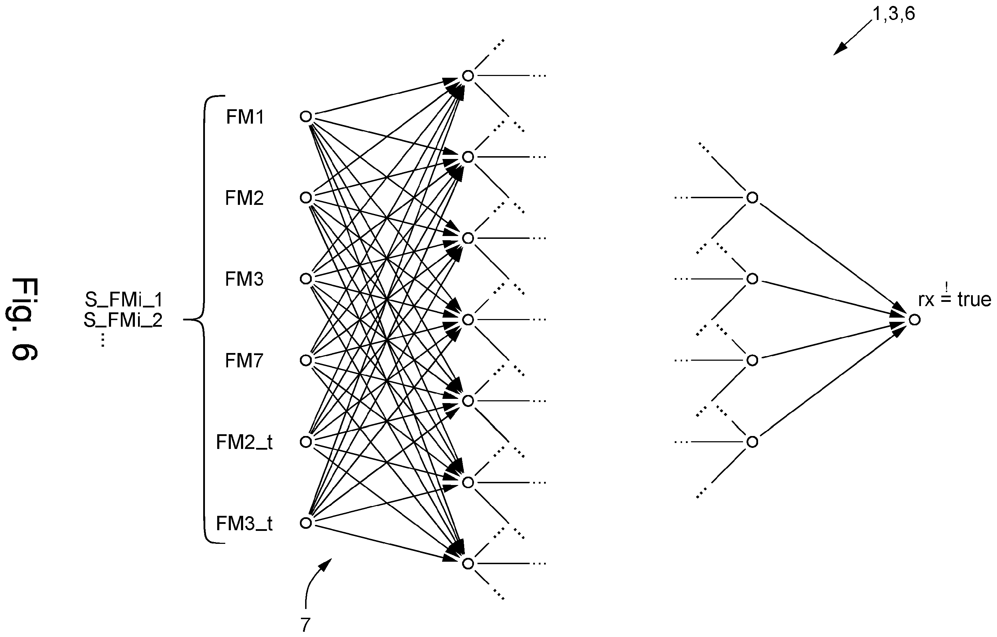

Fig. 6 zeigt ein weiteres Ausführungsbeispiel zur Ableitung der Nachrichtenregel rm aus den gewonnenen Anlerndatensätzen S_FMi_j, was hier auf Grundlage des Trainierens eines künstlichen neuronalen Netzes 7 erfolgt. Zumindest ein Teil der Busnachrichten FMi der Anlerndatensätze S_FMi_j werden dabei als Eingangsgrößen und die Erfüllung der Zustandsregel rx als Ausgangsgröße verwendet. Üblicherweise wird ein Teil der Anlerndatensätze S_FMi_j zum Test des trainierten künstlichen neuronalen Netzes 7 verwendet. Es hat sich als vorteilhaft herausgestellt, wenn als Eingangsgrößen zumindest teilweise die relativen Zeitpunkte FM2_t, FM3_t des Auftretens der jeweiligen Busnachricht FM2, FM3 verwendet wird, also auch ein zeitlicher Bezug des Auftretens der Feldbusnachrichten FMi eine Rolle spielt. Das trainierte neuronale Netz 7 wird dann auf das Feldgerät F1 übertragen und dort berechnet zusätzlich zu oder anstelle von der Zustandsregel rx.

Das beschriebene Verfahren 1 ist besonders vorteilhaft anwendbar im Zusammenhang mit Abfüllanlagen 8. In den Fig. 1, 3 und 4 ist daher auch der Einsatz des Feldgeräts F1 und der weiteren Busteilnehmer F2, F3, F4 in einer solchen Abfüllanlage 8 schematisch dargestellt. Das Feldgerät F1 ist hier ein erster Durchfluss- oder Füllstandssensor F1, der weitere Busteilnehmer F2 ist ein erstes Füllventil F2, wobei der erste Durchfluss- oder Füllstandssensor F1 und das Füllventil F2 zusammen mit einer ersten Steuer- und Auswerteeinheit, die nicht ausdrücklich dargestellt ist, eine erste Füllstelle 9 bilden, wobei die erste Steuer- und Auswerteeinheit zur Steuerung und Überwachung des Abfüllprozesses der ersten Füllstelle 9 dient. Der Busteilnehmer F3 ist ein zweiter Durchfluss- oder Füllstandssensor F3, der weitere Busteilnehmer F4 ist ein zweites Füllventil F4, wobei der zweite Durchfluss- oder Füllstandssensor F3 und das zweite Füllventil F4 zusammen mit einer zweiten Steuer- und Auswerteeinheit, die ebenfalls nicht ausdrücklich dargestellt ist, eine zweite Füllstelle 10 bilden, wobei die zweite Steuer- und Auswerteeinheit zur Steuerung und Überwachung des Abfüllprozesses der zweiten Füllstelle 10 dient. In den dargestellten Ausführungsbeispielen ist die erste Steuer- und Auswerteeinheit von dem ersten Durchfluss- oder Füllstandssensor F1 umfasst und die zweite Steuer- und Auswerteeinheit ist von dem zweiten Durchfluss- oder Füllstandssensor F3 umfasst. In den Figuren ist angedeutet, dass der erste Durchfluss- oder Füllstandssensor F1, der zweite Durchfluss- oder Füllstandssensor F3, das erste Füllventil F2 und das zweite Füllventil F4 mit einem Prozess P in Kontakt stehen, in diesem Beispiel mit dem Abfüllprozess.

Das erste Füllventil F2, der erste Durchfluss- oder Füllstandssensor F1, das zweite Füllventil F4 und der zweite Durchfluss- oder Füllstandssensor F3 stehen über einen Feldbus 2 miteinander in Kommunikationsverbindung. In den Fig. 1 und 4 ist zu erkennen, dass der ersten Steuer- und Auswerteeinheit eine Zustandsregel rx zum Wechsel von einem Normalbetrieb fn des ersten Durchfluss- oder Füllstandssensors F1 in einen Diagnosebetrieb fd des ersten Durchfluss- oder Füllstandssensors F1 bei Erfüllen der Zustandsregel rx vorgegeben ist. Entsprechend der allgemeinen Lehre hängt die Zustandsregel rx von wenigstens einer dem ersten Durchfluss- oder Füllstandssensor F1 bekannten Zustandsgröße x des ersten Durchfluss- oder Füllstandssensors F1 ab.

Die Abfüllanlagen 8 in den Fig. 1 und 3 zeichnen sich dadurch aus, dass die Steuer- und Auswerteeinheit der ersten Füllstelle 9 so ausgestaltet ist, dass die Steuer- und Auswerteeinheit im Betrieb das zuvor allgemein beschriebene Verfahren 1 durchführt, also im Anlernbetrieb 3 eine Mehrzahl von Erfassungsschritten 5 und den Auswerteschritt 6 ausführt, und die dadurch abgeleitete Nachrichtenregel rm anwendet.

Die Abfüllanlage 8 in Fig. 4 zeichnet sich dagegen dadurch aus, dass mit dem ersten Füllventil F2 und dem ersten Durchfluss- oder Füllstandssensor F1 der ersten Füllstelle 9 und mit dem zweiten Füllventil F4 und dem zweiten Durchfluss- oder Füllstandssensor F3 der zweiten Füllstelle 10 über den Feldbus 2 ein Service-Busteilnehmer FS verbunden ist und die Abfüllanlage 8 das Verfahren 1 durchführt, wie es zuvor allgemein in Zusammenhang mit dem Einsatz des Service-Busteilnehmers FS beschrieben worden ist.

### Bezugszeichen

- 1: Verfahren
- 2: Feldbus
- 3: Anlernbetrieb
- 4: erfassen und speichern von Feldbusnachrichten
- 5: Erfassungsschritt
- 6: Auswerteschritt
- 7: künstliches neuronales Netz
- 8: Abfüllanlage
- 9: erste Füllstelle
- 10: zweite Füllstelle

- F1: Feldgerät, 1. Durchfluss- oder Füllstandssensor
- F2: anderer Busteilnehmer, 1. Füllventil
- F3: anderer Busteilnehmer, 2. Durchfluss- oder Füllstandssensor
- F4: andere Busteilnehmer, 2. Füllventil
- FM, FMi: Busnachrichten
- P: Prozess
- fn: Normalbetrieb
- fd: Diagnosebetrieb
- rx: Zustandsregel
- rm: Nachrichtenregel
- x: Zustandsgröße
- S_FMi: Anlerndatensatz
- S_FMi_j: Anlerndatensätze
- FS: Service-Busteilnehmer

## Patentansprüche

1. Verfahren (1) zum Betreiben eines Feldgerätes (F1) der Prozessmesstechnik, wobei das Feldgerät (F1) über einen Feldbus (2) zur Übermittlung von Feldbusnachrichten (FMi) mit wenigstens einem anderen Busteilnehmer (F2, F3, F4) in Kommunikationsverbindung steht, wobei dem Feldgerät (F1) zumindest eine Zustandsregel (rx) zum Wechsel von einem Normalbetrieb (fn) des Feldgeräts (F1) in einen Diagnosebetrieb (fd) des Feldgeräts (F1) bei Erfüllen der Zustandsregel (rx) vorgegeben ist, wobei die Zustandsregel (rx) von wenigstens einer dem Feldgerät (F1) bekannten Zustandsgröße (x) des Feldgeräts (F1) abhängt,
**dadurch gekennzeichnet,**
**dass** in einem Anlernbetrieb (3) zumindest ein Teil der Feldbusnachrichten (FMi) erfasst und gespeichert (4) wird,
**dass** in einer Mehrzahl von Erfassungsschritten (5) jeweils im Falle des Erfüllens der Zustandsregel (rx) die erfassten und gespeicherten Feldbusnachrichten (FMi) zumindest teilweise als ein Anlerndatensatz (S_FMi_1, S_FMi_2) gespeichert werden, sodass eine Mehrzahl von Anlerndatensätzen (S_FMi_j) erfasst wird,
**dass** in einem Auswerteschritt (6) durch Auswerten mehrerer Anlerndatensätze (S_FMi_j) eine von wenigstens einer Feldbusnachricht (FMi) abhängige Nachrichtenregel (rm) zum Wechsel von dem Normalbetrieb (fn) des Feldgeräts (F1) in den Diagnosebetrieb (fd) des Feldgeräts (F1) abgeleitet wird und
**dass** das Feldgerät (F1) anstelle der oder zusätzlich zu der Zustandsregel (rx) die Nachrichtenregel (rm) zum Wechsel von dem Normalbetrieb (fn) des Feldgeräts (F1) in den Diagnosebetrieb (fd) des Feldgeräts (F1) anwendet.

2. Verfahren (1) nach Anspruch 1, **dadurch gekennzeichnet, dass** im Anlernbetrieb (3) die Feldbusnachrichten (FMi) von dem Feldgerät (F1) erfasst werden und die Erfassungsschritte (5) und der Auswerteschritt (6) auf dem Feldgerät (F1) ausgeführt werden.

3. Verfahren (1) nach Anspruch 1, **dadurch gekennzeichnet, dass** im Anlernbetrieb (3) die Feldbusnachrichten (FMi) von einem Service-Busteilnehmer (FS) erfasst werden und die Erfassungsschritte (5) und der Auswerteschritt (6) auf dem Service-Busteilnehmer (FS) ausgeführt werden, wobei das Feldgerät (F1) die Zustandsregel (rx) auswertet und das Erfüllen (rx=!true) der Zustandsregel (rx) dem Service-Busteilnehmer (FS) mitteilt, insbesondere mittels einer Feldbusnachricht.

4. Verfahren (1) nach Anspruch 3, **dadurch gekennzeichnet, dass** der Service-Busteilnehmer (FS) die abgeleitete Nachrichtenregel (rm) zu dem Feldgerät (F1) überträgt und die Nachrichtenregel (rm) dort angewendet wird.

5. Verfahren (1) nach einem der Ansprüche 1 bis 4, **dadurch gekennzeichnet, dass** das Ableiten der Nachrichtenregel (rm) in dem Auswerteschritt (6) aus den Anlerndatensätzen (S_FMi_j) auf Grundlage einer Regressionsanalyse erfolgt, mit den verschiedenen Busnachrichten (FMi) als unabhängige Variablen und der Erfüllung der Zustandsregel (rx) als abhängige Variable.

6. Verfahren (1) nach Anspruch 5, **dadurch gekennzeichnet, dass** die Busnachrichten (FMi) mit der kleinsten Teilkorrelation an der Erfüllung der Zustandsregel (rx) sequenziell ausgeschlossen werden, bis nur noch eine vorgegebene Anzahl an unabhängigen Variablen Teil der Nachrichtenregel (rm) ist.

7. Verfahren (1) nach einem der Ansprüche 1 bis 4, **dadurch gekennzeichnet, dass** im Auswerteschritt (6) das Ableiten der Nachrichtenregel (rm) aus den Anlerndatensätzen (S_FMi_j) auf Grundlage des Trainierens eines künstlichen neuronalen Netzes (7) erfolgt, mit zumindest einem Teil der Busnachrichten (FMi) der Anlerndatensätze (S_FMi_j) als Eingangsgrößen und der Erfüllung der Zustandsregel (rx) als Ausgangsgröße, insbesondere wobei als Eingangsgröße zumindest teilweise auch der relative Zeitpunkt (FM2_t, FM3_t) des Auftretens der jeweiligen Busnachricht (FM2, FM3) verwendet wird.

8. Verfahren (1) nach einem der Ansprüche 1 bis 7, **dadurch gekennzeichnet, dass** in den Erfassungsschritten (5) solche Feldbusnachrichten (FMi) in einem Anlerndatensatz (S_FMi_j) gespeichert werden, die nicht an das Feldgerät (F1) selbst adressiert waren.

9. Abfüllanlage (8) mit einer ersten Füllstelle (9) und mit wenigstens einer zweiten Füllstelle (10), wobei die erste Füllstelle (9) wenigstens ein erstes Füllventil (F2), wenigstens einen ersten Durchfluss- oder Füllstandssensor (F1) und wenigstens eine erste Steuer- und Auswerteeinheit zur Steuerung und Überwachung des Abfüllprozesses der ersten Füllstelle (9) aufweist, und wobei die zweite Füllstelle (10) wenigstens ein zweites Füllventil (F4), wenigstens einen zweiten Durchfluss- oder Füllstandssensor (F3) und wenigstens eine zweite Steuer- und Auswerteeinheit zur Steuerung und Überwachung des Abfüllprozesses der zweiten Füllstelle aufweist (10), wobei das erste Füllventil (F2), der erste Durchfluss- oder Füllstandssensor (F1), das zweite Füllventil (F4) und der zweite Durchfluss- oder Füllstandssensor (F3) über einen Feldbus (2) miteinander in Kommunikationsverbindung stehen, wobei zumindest der ersten Steuer- und Auswerteeinheit eine Zustandsregel (rx) zum Wechsel von einem Normalbetrieb (fn) des ersten Durchfluss- oder Füllstandssensors (F1) in einen Diagnosebetrieb des ersten Durchfluss- oder Füllstandssensors (F1) bei Erfüllen der Zustandsregel (rx) vorgegeben ist, wobei die Zustandsregel (rx) von wenigstens einer dem ersten Durchfluss- oder Füllstandssensor (F1) bekannten Zustandsgröße (x) des ersten Durchfluss- oder Füllstandssensors (F1) abhängt,
**dadurch gekennzeichnet,**
**dass** die Steuer- und Auswerteeinheit wenigstens der ersten Füllstelle (9) so ausgestaltet ist, dass die Steuer- und Auswerteeinheit im Betrieb das Verfahren (1) gemäß einem der Ansprüche 1 bis 2 oder 5 bis 8, insoweit rückbezogen auf Anspruch 1 oder 2, durchführt oder
**dass** mit dem ersten Füllventil (F2) und dem ersten Durchfluss- oder Füllstandssensor (F1) der ersten Füllstelle (9) und mit dem zweiten Füllventil (F4) und dem zweiten Durchfluss- oder Füllstandssensor (F3) der zweiten Füllstelle (10) über den Feldbus (2) ein Service-Busteilnehmer (FS) verbunden ist und die Abfüllanlage (8) ein Verfahren gemäß den Ansprüchen 3 oder 4 oder gemäß den Ansprüchen 5 bis 8, insoweit rückbezogen auf Anspruch 3 oder 4, durchführt.

## Claims

1. Method (1) for operating a field device (F1) for process measurement technology, wherein the field device (F1) is in communication with at least one other bus subscriber (F2, F3, F4) via a field bus (2) for transmitting field bus messages (FMi), wherein at least one status rule (rx) is specified to the field device (F1) for changing from a normal mode (fn) of the field device (F1) to a diagnostic mode (fd) of the field device (F1) when the status rule (rx) is fulfilled, wherein the status rule (rx) depends on at least one status variable (x) of the field device (F1) known to the field device (F1),
**characterized in**
**that** at least some of the fieldbus messages (FMi) are captured and stored (4) in a learning mode (3),
**that** in a plurality of capture steps (5), the captured and stored fieldbus messages (FMi) are at least partially stored as a learning data set (S_FMi_1, S_FMi_2) in each case if the status rule (rx) is fulfilled, so that a plurality of learning data sets (S_FMi_j) are captured,
**that** in an evaluation step (6), a message rule (rm) dependent on at least one fieldbus message (FMi) for changing from normal mode (fn) of the field device (F1) to diagnostic mode (fd) of the field device (F1) is derived by evaluating a plurality of learning data sets (S_FMi_j), and
**that** the field device (F1) applies the message rule (rm) for changing from the normal mode (fn) of the field device (F1) to the diagnostic mode (fd) of the field device (F1) instead of or in addition to the status rule (rx).

2. Method (1) according to claim 1, **characterized in that** in the learning mode (3) the fieldbus messages (FMi) are captured by the field device (F1) and the capture steps (5) and the evaluation step (6) are performed on the field device (F1).

3. Method (1) according to claim 1, **characterized in that** in learning mode (3) the field bus messages (FMi) are captured by a service bus subscriber (FS) and the capture steps (5) and the evaluation step (6) are performed on the service bus subscriber (FS), wherein the field device (F1) evaluates the status rule (rx) and communicates the fulfilment (rx=!true) of the status rule (rx) to the service bus subscriber (FS), in particular by means of a field bus message.

4. Method (1) according to claim 3, **characterized in that** the service bus subscriber (FS) transmits the derived message rule (rm) to the field device (F1) and the message rule (rm) is applied there.

5. Method (1) according to any one of claims 1 to 4, **characterized in that** the message rule (rm) is derived in the evaluation step (6) from the learning data sets (S_FMi_j) on the basis of a regression analysis, with the various bus messages (FMi) as independent variables and the fulfilment of the status rule (rx) as the dependent variable.

6. Method (1) according to claim 5, **characterized in that** the bus messages (FMi) with the smallest partial correlation in the fulfilment of the status rule (rx) are sequentially excluded until only a predetermined number of independent variables are still part of the message rule (rm).

7. Method (1) according to any one of claims 1 to 4, **characterized in that**, in the evaluation step (6), the message rule (rm) is derived from the learning data sets (S_FMi_j) on the basis of training an artificial neural network (7), with at least some of the bus messages (FMi) of the learning data sets (S_FMi_j) as input variables and the fulfillment of the status rule (rx) as output variable, in particular wherein the relative time (FM2_t, FM3_t) of the occurrence of the respective bus message (FM2, FM3) is also used at least partially as input variable.

8. Method (1) according to any one of claims 1 to 7, **characterized in that**, in the capture steps (5), such field bus messages (FMi) are stored in a learning data set (S_FMi_j) which were not addressed to the field device (F1) itself.

9. Filling system (8) with a first filling point (9) and with at least one second filling point (10), wherein the first filling point (9) has at least one first filling valve (F2), at least one first flow or fill level sensor (F1) and at least one first control and evaluation unit for controlling and monitoring the filling process of the first filling point (9), and wherein the second filling point (10) has at least one second filling valve (F4), at least one second flow or fill level sensor (F3) and at least one second control and evaluation unit for controlling and monitoring the filling process of the second filling point (10), wherein the first filling valve (F2), the first flow or fill level sensor (F1), the second filling valve (F4) and the second flow or fill level sensor (F3) are in communication with each other via a field bus (2), wherein at least the first control and evaluation unit is provided a status rule (rx) for changing from a normal mode (fn) of the first flow or fill level sensor (F1) to a diagnostic mode of the first flow or fill level sensor (F1) when the status rule (rx) is fulfilled, wherein the status rule (rx) depends on at least one status variable (x) of the first flow or fill level sensor (F1) known to the first flow or fill level sensor (F1),
**characterized in**
**that** the control and evaluation unit of at least the first filling point (9) is designed in such a way that the control and evaluation unit performs the method (1) according to any one of claims 1 to 2 or 5 to 8, in this respect referring back to claim 1 or 2, or
**that** a service bus subscriber (FS) is connected to the first filling valve (F2) and the first flow or fill level sensor (F1) of the first filling point (9) and to the second filling valve (F4) and the second flow or fill level sensor (F3) of the second filling point (10) via the field bus (2) and the filling system (8) performs a method according to claims 3 or 4 or according to claims 5 to 8, in this respect referring back to claim 3 or 4.

## Revendications

1. Procédé (1) pour faire fonctionner un appareil de terrain (F1) de la technique de mesure de processus, dans lequel l'appareil de terrain (F1) est en communication avec au moins un autre abonné de bus (F2, F3, F4) par l'intermédiaire d'un bus de terrain (2) pour la transmission de messages de bus de terrain (FMi), au moins une règle d'état (rx) pour passer d'un mode normal (fn) de l'appareil de terrain (F1) au mode de diagnostic (fd) de l'appareil de terrain (F1) lorsque la règle d'état (rx) est satisfaite étant prédéfinie pour l'appareil de terrain (F1), la règle d'état (rx) dépendant d'au moins une grandeur d'état (x) de l'appareil de terrain (F1) connue de l'appareil de terrain (F1),
**caractérisé**
**en ce qu'**au moins une partie des messages de bus de terrain (FMi) est détectée et mémorisée (4) dans un mode d'apprentissage (3),
**en ce que**, lors d'une pluralité d'étapes de détection (5), lorsque la règle d'état (rx) est satisfaite, les messages de bus de terrain (FMi) détectés et mémorisés sont mémorisés au moins partiellement sous la forme d'un enregistrement de données d'apprentissage (S_FMi_1, S_FMi_2), de sorte qu'une pluralité d'enregistrements de données d'apprentissage (S_FMi_j) sont détectés,
**en ce que**, lors d'une étape d'évaluation (6), une règle de message (rm) dépendant d'au moins un message de bus de terrain (FMi) pour passer du mode normal (fn) de l'appareil de terrain (F1) au mode de diagnostic (fd) de l'appareil de terrain (F1) est dérivée par évaluation de plusieurs jeux de données d'apprentissage (S_FMi_j), et en ce qu'au lieu ou en plus de la règle d'état (rx), l'appareil de terrain (F1) applique la règle de message (rm) pour passer du mode normal (fn) de l'appareil de terrain (F1) au mode de diagnostic (fd) de l'appareil de terrain (F1).

2. Procédé (1) selon la revendication 1, **caractérisé en ce que**, dans le mode d'apprentissage (3), les messages de bus de terrain (FMi) sont détectés par l'appareil de terrain (F1) et les étapes de détection (5) et l'étape d'évaluation (6) sont exécutées sur l'appareil de terrain (F1).

3. Procédé (1) selon la revendication 1, **caractérisé en ce que**, dans le mode apprentissage (3), les messages de bus de terrain (FMi) sont détectés par un abonné de bus de service (FS) et les étapes de détection (5) et d'évaluation (6) sont exécutées sur l'abonné de bus de service (FS), l'appareil de terrain (F1) évaluant la règle d'état (rx) et notifiant à l'abonné de bus de service (FS) que la règle d'état (rx) est satisfaite (rx=!true), en particulier au moyen d'un message de bus de terrain.

4. Procédé (1) selon la revendication 3, **caractérisé en ce que** l'abonné de bus de service (FS) transmet la règle de message dérivée (rm) à l'appareil de terrain (F1) et **en ce que** la règle de message (rm) y est appliquée.

5. Procédé (1) selon l'une des revendications 1 à 4, **caractérisé en ce que** la dérivation de la règle de message (rm) est effectuée lors de l'étape d'évaluation (6) à partir des jeux de données d'apprentissage (S_FMi_j) sur la base d'une analyse de régression, les différents messages de bus (FMi) étant utilisés comme variables indépendantes et le fait que la règle d'état (rx) est satisfaite étant utilisé comme variable dépendante.

6. Procédé (1) selon la revendication 5, **caractérisé en ce que** les messages de bus (FMi) présentant la corrélation partielle la plus faible sont exclus séquentiellement de l'application de la règle d'état (rx) jusqu'à ce qu'un nombre prédéfini de variables indépendantes fasse partie de la règle de message (rm).

7. Procédé (1) selon l'une des revendications 1 à 4, **caractérisé en ce que**, lors de l'étape d'évaluation (6), la règle de message (rm) est dérivée des jeux de données d'apprentissage (S_FMiJ) sur la base de l'apprentissage d'un réseau neuronal artificiel (7), au moins une partie des messages de bus (FMi) des jeux de données d'apprentissage (S_FMi_j) étant utilisée comme grandeurs d'entrée et le fait que la règle d'état (rx) est satisfaite étant utilisé comme grandeur de sortie, en particulier l'instant relatif (FM2_t, FM3_t) d'apparition du message de bus respectif (FM2, FM3) étant en particulier au moins en partie également utilisé comme grandeur d'entrée.

8. Procédé (1) selon l'une des revendications 1 à 7, **caractérisé en ce que**, lors des étapes de détection (5), des messages de bus de terrain (FMi) qui n'étaient pas adressés à l'appareil de terrain (F1) lui-même sont mémorisés dans un jeu de données d'apprentissage (S_FMi_J).

9. Installation de remplissage (8) comprenant un premier point de remplissage (9) et au moins un deuxième point de remplissage (10), le premier point de remplissage (9) comportant au moins une première vanne de remplissage (F2), au moins un premier capteur de débit ou de niveau de remplissage (F1) et au moins une première unité de commande et d'évaluation pour commander et surveiller le processus de remplissage du premier point de remplissage (9), et le deuxième point de remplissage (10) comportant au moins une deuxième vanne de remplissage (F4), au moins un deuxième capteur de débit ou de niveau de remplissage (F3) et au moins une deuxième unité de commande et d'évaluation pour commander et surveiller le processus de remplissage du deuxième point de remplissage (10), la première vanne de remplissage (F2), le premier capteur de débit ou de niveau de remplissage (F1), la deuxième vanne de remplissage (F4) et le deuxième capteur de débit ou de niveau de remplissage (F3) étant en communication l'un avec l'autre par l'intermédiaire d'un bus de terrain (2), une règle d'état (rx) pour passer d'un mode normal (fn) du premier capteur de débit ou de niveau de remplissage (F1) à un mode de diagnostic du premier capteur de débit ou de niveau de remplissage (F1) lorsque la règle d'état (rx) est satisfaite étant prédéfinie au moins pour la première unité de commande et d'évaluation, la règle d'état (rx) dépendant d'au moins une grandeur d'état (x) du premier capteur de débit ou de niveau de remplissage (F1) connue du premier capteur de débit ou de niveau de remplissage (F1),
**caractérisé**
**en ce que** l'unité de commande et d'évaluation d'au moins le premier point de remplissage (9) est configurée de telle sorte que, pendant le fonctionnement, l'unité de commande et d'évaluation mette en œuvre le procédé (1) selon l'une des revendications 1 à 2 ou 5 à 8, dans la mesure où elles dépendent de la revendication 1 ou 2, ou **en ce qu'**un abonné de bus de service (FS) est relié par l'intermédiaire du bus de terrain (2) à la première vanne de remplissage (F2) et au premier capteur de débit ou de niveau de remplissage (F1) du premier point de remplissage (9) et à la deuxième vanne de remplissage (F4) et au deuxième capteur de débit ou de niveau de remplissage (F3) du deuxième point de remplissage (10), et **en ce que** l'installation de remplissage (8) met en œuvre un procédé selon les revendications 3 ou 4 ou selon les revendications 5 à 8, dans la mesure où elles dépendent de la revendication 3 ou 4.
